# EUROPÄISCHE PATENTSCHRIFT

(11) **EP 0 753 472 B1**
(45) Veröffentlichungstag und Bekanntmachung des Hinweises auf die Patenterteilung: **07.11.2001**
(21) Anmeldenummer: 96111185.3
(22) Anmeldetag: 11.07.1996
(51) Int. Cl.: B65G 43/02

(54) **Verfahren und Anordnung zur Überwachung eines Fördergurtes**
Method and arrangement for monitoring a conveyor belt
Procédé et dispositif pour surveiller une bande transporteuse

(30) Priorität: 12.07.1995 DE 19525326
(43) Veröffentlichungstag der Anmeldung: 15.01.1997
(73) Patentinhaber: ContiTech Transportbandsysteme GmbH, 30165 Hannover (DE)
(72) Erfinder: Alles, Rainer, Dr., 30916 Isernhagen (DE)

(56) Entgegenhaltungen:
- DE-A- 2 404 769
- FR-A- 2 188 217
- US-A- 5 168 266
- US-A- 5 221 831
- US-A- 5 319 354

## Beschreibung

Die Erfindung betrifft ein Verfahren zur induktiven Überwachung eines Fördergurtes mit in Abständen zueinander eingelegten, elektrischen Sendern aus integrierten Schaltkreis-Transpondern, und mit mindestens einer außerhalb des Gurtes ortsfest angeordneten Sende- und Empfangseinrichtung, wobei die Sender ihre Spannungsversorgung durch induktive Kopplung an eine als Primärspule wirkende, erregte Wicklung der außerhalb des Gurtes ortsfest angebrachten Sende- und Empfangseinrichtung erhalten, wobei jeweils eine Datenträgerspule als Sekundärspule der Spannungs- bzw. Stromversorgung des jeweiligen Senders wirkt und von dem während der Spannungsversorgung ein Dauersignal mit individueller Kennung in umgekehrter Richtung an die Wicklung der ortsfesten Sende- und Empfangseinrichtungen übertragen wird, das von einer elektronischen Auswerteeinheit verarbeitet wird.

Gurtförderanlagen mit endlos umlaufenden Fördergurten, die hunderte von Metern lang sein können, stellen einen beträchtlichen Wert dar. Um überraschende größere Ausfälle zu vermeiden, gilt es, eine zuverlässige Überwachung sicherzustellen.

Bisherige Überwachungsverfahren beschäftigen sich schwerpunktmäßig mit der Warnung vor Längsrissen. So z.B. die Überwachungsverfahren aus DE 12 33 324, DE 17 81 133, DE 12 74 499 und DE 12 76 546.

Darüber hinaus gibt es Vorkehrungen zur Überwachung des Verschleißes, d.h. der Abnutzung von Fördergurten.

So beschreibt z.B. die DE 40 21 064 einen Fördergurt mit einer eingearbeiteten Schicht aus gefärbtem Material.

Ein Fördergurt besteht üblicherweise aus einem Kern aus Stahlseilen oder aus textilem Verstärkungsgewebe, der sogenannten Karkasse, die ein- oder beidseitig mit einer Außenschicht aus elastomerem Werkstoff beschichtet ist. Nach der DE 40 21 064 ist nun zwischen der Karkasse und der Außenschicht eine dünne Zwischenschicht vorgesehen, deren Farbe von der Farbe des Materials zur Imprägnierung der Karkasse und von der Farbe der Überzugsschicht abweicht. Dabei kann man visuell erkennen, wenn die Außenschicht abgenutzt und die Karkasse erreicht ist. Somit stellt die Schicht aus gefärbtem Material eine optische Abnutzungsanzeige für das Band dar.

Da sich die Farbschicht unter der Deckschicht befindet, kann eine Abnutzung erst dann festgestellt werden, wenn die Deckschicht (an dieser Stelle) völlig abgetragen ist. Für die optisch-visuelle Feststellung der Abnutzung ist sowohl (Tages)-Licht als auch ein Beobachter erforderlich. Für eine gewissenhafte Prüfung der Abnutzung ist das unbeladene, möglichst von Schmutz und Staub befreite Förderband vorzugsweise stellzusetzen.

Es ist bereits vorgeschlagen worden, sogenannte Transponder in Fördergurten einzusetzen und dazu zu verwenden, den Zustand der Fördergurtdeckschichten zu identifizieren bzw. zu überwachen.

Transponder sind batterielose Sender, mit denen mit einem Empfangsteil und einem Sendeteil ausgestattete Abfragegeräte Nachrichten übertragen werden können. In den Transpondern sind die Nachrichten durch feste Programmierung gespeichert. Auf einen im Abfragegerät erzeugten Abfragebefehl wird als Antwort auf den HF-Abfrageimpuls mit vorgegebener Trägerfrequenz und vorgegebener Trägerdauer der Transponder seine individuelle Kennung als Antwort zurücksenden, wobei er den Abfrageimpuls auch zur Erzeugung einer Versorgungsspannung ausnutzt. Üblicherweise weisen die Transponder integrierte Schaltkreise auf, die entsprechend programmierbar sind.

In dem genannten Vorschlag wurden derartige Transponder zusammen mit an sich bekannten Leiterschleifen von üblichen Schlitzüberwachungen kombiniert. Werden die Leiterschleifen durch eine Abnutzung oder einen Gurtschlitz zerstört, wird der Transponder eine Signalabweichung oder einen Signalausfall anzeigen.

Der Erfindung liegt die Aufgabe zugrunde, ein mit Transpondern ausgestatteten Fördergurt derart auszugestalten, daß ein Verschleiß von Fördergurtdeckschichten direkt über eine Transponderanordnung detektiert werden kann.

Die Aufgabe wird erfindungsgemäß dadurch gelöst, daß die Transponder mit ihrer Datenträgerspule in der verschleißabhängigen Deckschicht und/oder Karkasse derart angeordnet werden, daß sie bei Eintreten eines bestimmten Verschleißbetrages zerstört werden oder herausfallen, und daß der im Falle ihrer durch Verschleiß der Fördergurtdeckplatte bzw. Karkasse entstandenen Zerstörung des Transponders auftretende Signalausfall von der Auswerteeinheit registriert und für Steuerungszwecke ausgewertet wird.

Bei einem Fördergurt werden in dessen Deckplatte bzw. zwischen seiner Deckplatte und seiner Karkasse oder auch in der Karkasse in einer bestimmten Tiefe bzw. in verschiedenen Tiefen mindestens ein Transponder geringer Dicke eingesetzt. Bei fortgeschrittenem Verschleißzustand fällt der Transponder aus und damit ist ein entsprechendes Signal nicht mehr empfangbar. Daraus kann die Auswerteeinheit einen Rückschluß auf den Verschleißzustand des Fördergurtes ziehen.

Eine vorteilhafte Ausgestaltung des Verfahrens wird im Anspruch 2 dadurch gekennzeichnet, daß im Falle der Zerstörung oder des Verlustes mindestens eines Transponders ein Alarmsignal erzeugt wird und/oder eine Abschaltung des Fördergurtes erfolgt und/oder eine graphische Darstellung der Position des ausgefallenen Senders bzw. der ausgefallenen Sender vorgenommen wird. Dem Betreiber der Fördergurtanlage wird auf einfache Weise ohne Verlassen seines Steuerstandes der Verschleißzustand des Fördergurtes kenntlich gemacht, wobei die mögliche Abschaltung des Fördergurtes eine Automatisierungsmöglichkeit der Fördergurtanlage darstellt.

Die Erfindung betrifft auch eine Überwachungs- und Warnanordnung eines Fördergurtes zur Durchführung des Verfahrens nach dem vorhergehenden Patentanspruch 1 mit in den Fördergurt in Abständen eingebetteten elektrischen Sendern und mit mindestens einer außerhalb des Gurtes ortsfest angeordneten Sende- und Empfangseinrichtung, wobei für die Spannungsversorgung der Sender eine als primäre Induktionsspule wirkende erregte Wicklung der außerhalb des Gurtes ortsfest angebrachten Sende- und Empfangseinrichtung vorgesehen ist, wobei die Sender jeweils an eine Datenträgerspule angeschlossen sind und einen Transponder bilden, wobei die Datenträgerspule als Sekundärspule der ortsfesten Einrichtung dient und von denen während der Spannungsversorgung Dauersignale mit ihren jeweils individuellen Kennungen in umgekehrter Richtung über die jeweilige Datenträgerspule induktiv an die Wicklung einer der ortsfesten Sende- und Empfangseinrichtungen übertragbar sind.

Eine derartige Überwachungs- und Warnanordnung ist dadurch gekennzeichnet, daß die Transponder mit Datenträger und Datenträgerspule in dem Fördergurt derart angeordnet sind, daß sie bei Eintreten eines bestimmten Verschleißbetrages zerstörbar sind oder herausfallen, und daß die Transponder im Falle ihrer durch Verschleiß der Fördergurtdeckplatte bzw. Karkasse entstandenen Zerstörung nicht mehr sendebereit sind.

In weiterer vorteilhafter Ausgestaltung der Erfindung sind gemäß Patentanspruch 4 mehrere Transponder in einer bestimmten Tiefe oder in verschiedenen Tiefen in die Deckplatte bzw. zwischen Deckplatte und Karkasse und/oder in die Karkasse eingesetzt. In weiterer vorteilhafter Ausgestaltung der Erfindung gemäß Patentanspruch 5 sind die Sender in neben- oder hintereinander gruppierten Einheiten angeordnet.

Auf diese Weise wird bei einer der jeweiligen Implantationstiefe entsprechenden Abnutzung des Fördergurtes der entsprechende Transponder zerstört, so daß ein totaler Sendeausfall feststellbar ist. Wählt man nicht zu große Abstufungen bezüglich der Höhenabstände der Transponder zu der Oberfläche des Fördergurtes, so läßt sich der Abnutzungsgrad hinreichend genau eingrenzen.

Weitere vorteilhafte Ausführungsformen und Weiterbildungen ergeben sich aus den folgenden Unteransprüchen.

Das erfindungsgemäße Überwachungsverfahren ist derart konzipiert, daß der Transponder im Falle des auf ihn abgestimmten Verschleißes nicht mehr sendebereit ist. Mittels der Erfindung ist auch der Verschleißgrad anhand des Sendeausfalls an der fraglichen Stelle durch Ausbleiben des entsprechenden individuellen Codes des zerstörten oder herausgefallenen Transponders feststellbar. Die Kennungen der einzelnen Transponder werden durch einen Lerndurchlauf des Fördergurtes durch die Überwachungseinrichtung oder durch andere Methoden einmal in einer Überwachungseinheit bzw. Auswerteeinheit registriert. Dadurch kann ein ständiger Vergleich mit dem in der Auswerteeinheit elektronisch hinterlegten Muster der Transponderkennungen und der Ist-Situation erfolgen.

Da die Transponderchips nebst Datenträgerspulen aus einem temperaturresistenten Aufbau ausgewählt werden, können sie bereits während des Herstellungsprozesses der Fördergurte in diese einvulkanisiert werden. Ebenso können fertige Fördergurte nachträglich mit den erfindungsgemäßen Überwachungsanordnungen ausgerüstet werden, ohne befürchten zu müssen, die Transponderchips durch einen nachträglichen Vulkanisiervorgang zu zerstören.

Anhand der Zeichnung werden nachstehend zwei Ausführungsbeispiele der Erfindung näher erläutert. Es zeigt
- Fig. 1: im Längsschnitt einen Ausschnitt aus einem Fördergurt mit erfindungsgemäß angeordneten Transpondern,
- Fig. 2: eine Draufsicht auf einen Ausschnitt eines Fördergurtes, und zwar
- Fig. 2a: eine Variante A und
- Fig. 2b: eine Variante B,
- Fig. 3: eine Draufsicht auf einen Transponder mit seiner Datenträgerspule,
- Fig. 4: eine schematische Seitenansicht eines Fördergurtes mit einer zugeordneten ortsfesten Sende- und Empfangseinrichtung.

Wesentliche Bestandteile der erfindungsgemäßen Anordnung zur Überwachung von Fördergurten 2 zwecks Erfassung des Verschleißes der oberen Fördergurtdeckplatte 4 und der Karkasse 6 sind in Abständen voneinander in die Fördergurte 2 eingelegte Datenträgerspulen 8, an die jeweils ein passiver Transponder als Sender 10 angeschlossen ist.

Die Sender 10 sind Transponderchips mit integrierten miniaturisierten Datencodeträgern, denen jeweils eine individuelle Kennung einprogrammiert ist. Diese Kennung wird während des Sendevorgangs mit ausgestrahlt. Dadurch ist es während des normalen, d.h. fehlerfreien Betriebes der Fördergurtanlage möglich, anhand der jeweiligen abgestrahlten Kennung das Vorhandensein des jeweiligen Senders 10 festzustellen.

Die aus Datenträgerspule 8 und Transponderchip 10 bestehenden Einheiten sind in ein temperaturbeständiges Kunststofflaminat 12, das die Größe einer Münze oder einer Scheckkarte haben kann, eingeschweißt.

Die Transponder 10 sind jeweils mit einer individuellen Kennung programmiert. Diese Kennung wird bei der Herstellung der Transponder 10 fest "eingebrannt".

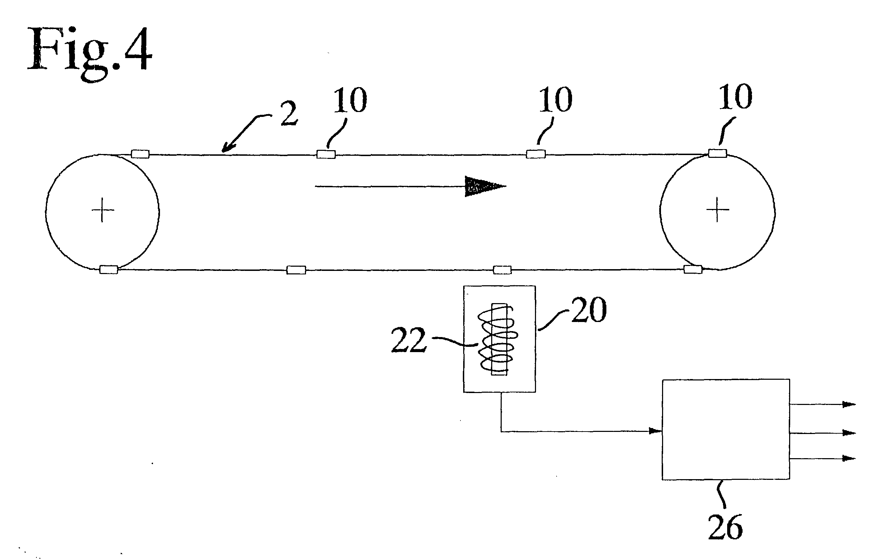

Bei Betrieb des Fördergurtes 2 sendet mindestens eine ortsfeste Sende- und Empfangseinrichtung 20 (Fig. 4) permanent ein Signal im Rundfunkfrequenzbereich aus. Die Transponder 10 und Datenträgerspulen 8 durchqueren den Sendebereich dieser ortsfesten Einrichtung 20. Dabei wirken die Datenträgerspulen 8 bezüglich der Wicklung 22 der ortsfesten Einrichtung 20 als Sekundärspulen, die von der ortsfesten Einrichtung 20 Energie aufnehmen und damit den Rundfunkfrequenz-Transponder 10 speisen. Die Anzahl der Windungen der Datenträgerspule 8 und der Wicklung 22 der Sende- und Empfangseinrichtung 20 sind so gewählt und zueinander ins Verhältnis gesetzt, daß eine optimale Anpassung an die Eingangsimpedanz des Senders 10 gewährleistet ist.

Die Reichweite der ortsfesten Sende- und Empfangseinrichtung 20 ist wiederum so gewählt, daß eine induktive Stromversorgung der in dem Fördergurt 2 mitbewegten Sender 10 nur dann erfolgt, wenn sich die Datenträgerspule 8 in unmittelbarer Nähe über oder unter der Sende- und Empfangseinrichtung 20 befindet. Befindet sich nämlich eine Datenträgerspule 8 im "induktiven" Sichtfenster direkt oberhalb der ortsfesten Sende- und Empfangseinrichtung 20, so wird von der ortsfesten Wicklung 22 ein Sekundärstrom in der Datenträgerspule 8 induziert, der den daran angeschlossenen Sender 10 mit Energie versorgt.

Wird der Transponder 10 mit Energie versorgt, so gibt er seinerseits ein Signal mit der ihm eigenen, zuvor individuell programmierten Kennung in umgekehrter Richtung über die Datenträgerspule 8 an die ortsfeste Sende- und Empfangseinrichtung 20 ab. Dabei wird das Datensignal dem Energiefluß aufmoduliert. Als Frequenz hat sich 130 KHZ als vorteilhaft erwiesen. Aber auch andere Frequenzen sind denkbar. Von der ortsfesten Sende- und Empfangseinrichtung 20 wird ein dem Datensignal entsprechendes Signal einer elektronischen Auswerteeinheit 26 zugeführt, die dieses Signal mit einem hinterlegten, gespeicherten Signalschema vergleicht.

In Fig. 2a werden Transponder in Gurtlängsrichtung in Abständen hintereinander angeordnet dargestellt. Diese Längserkennung ist dann von Vorteil, wenn aneinandergefügte Gurtabschnitte verschiedener Herstellprozesse detektiert werden sollen.

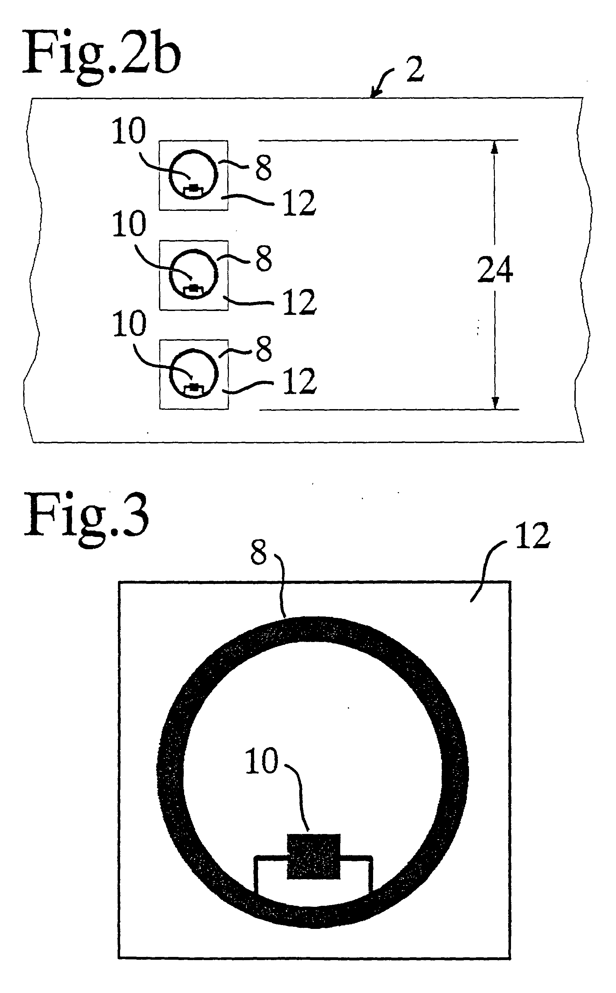

In Fig. 2b wird eine Gruppe von Transpondern 10 auf einer Linie quer zur Längsrichtung des Fördergurtes dargestellt. Dadurch wird die jeweilige Verschleißzone in Querrichtung des Fördergurtes erfaßbar.

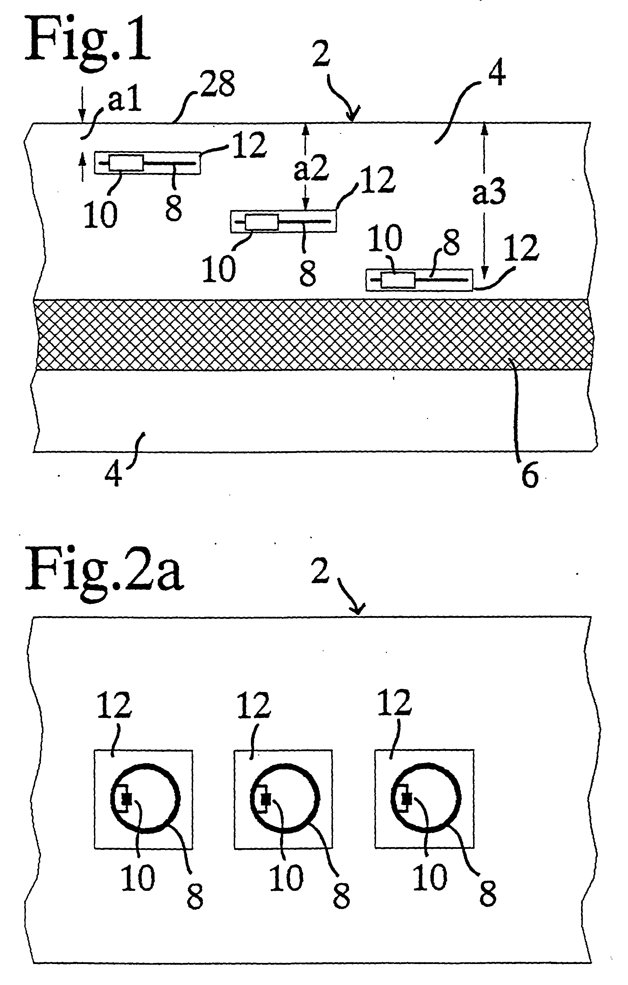

Zusätzlich zu diesen beiden möglichen gruppenweisen Anordnungen der Transponder 10 können die Transponder in unterschiedlichen Höhen in der Deckschicht 4 und/oder Karkasse 6 des Fördergurtes 2 angeordnet werden (Fig. 1). Dabei können beispielsweise drei Transponder 10 (Fig. 2a) in Gurtlängsrichtung in unterschiedlichen Höhen (Fig. 1) angeordnet werden. Dadurch ist der zunehmende Verschleiß des Fördergurtes 2 detektierbar.

Zur Bestimmung des Verschleißes insbesondere des Abnutzungsgrads der tragseitigen Deckschicht 4 sind die Transponder in neben- oder hintereinander gruppierte Einheiten in der Verschleißzone 24 des Fördergurtes 2 verteilt. Dabei sind die einzelnen Sender 10 dieser Gruppen in unterschiedlichen Tiefen a1, a2, a3 unter der Oberfläche 28 der tragseitigen Deckschicht 4 einvulkanisiert.

Wird nun die tragseitige Deckschicht 4 des Fördergurtes 2 abgenutzt, so wird je nach Stärke des Abnutzungsgrades der dem Abnutzungsgrad entsprechende Transponder 10 zerstört oder er fällt heraus. Dieses hat Signalausfall zur Folge.

Wie in Fig. 4 schematisch dargestellt, sind die Sender 10 zur Überwachung des Gurtes 2 in etwa gleichen Abständen über die gesamte Länge des Fördergurtes 2 verteilt.

Die ortsfeste Sende- und Empfangseinrichtung 20 befindet sich unter dem rücklaufenden Untertrum. Der Signalausgang der Sende- und Empfangseinrichtung 20 ist mit einem Signaleingang einer elektronischen Auswerteeinheit 26 verbunden.

## Patentansprüche

1. Verfahren zur induktiven Überwachung eines Fördergurtes (2) mit in Abständen zueinander in die Deckschicht und/oder Karkasse eingelegten, elektrischen Sendern (10) aus integrierten Schaltkreistranspondern und mit mindestens einer außerhalb des Gurtes (2) ortsfest angeordneten Sende- und Empfangseinrichtung (20), wobei die Sender (10) ihre Spannungsversorgung durch induktive Kopplung an eine als Primärspule wirkende, erregte Wicklung (22) der außerhalb des Gurtes (2) ortsfest angebrachten Sendeund Empfangseinrichtung(en) (20) erhalten, wobei jeweils eine Datenträgerspule (8) als Sekundärspule der Spannungs- bzw. Stromversorgung des jeweiligen Senders (10) wirkt, von dem während der Spannungsversorgung ein Dauersignal mit individueller Kennung in umgekehrter Richtung an die Wicklung (22) der ortsfesten Sende- und Empfangseinrichtungen (20) übertragen wird, das von einer elektronischen Auswerteeinheit verarbeitet wird,
**dadurch gekennzeichnet,**
**daß** die Transponder (10) mit der Datenträgerspule in dem Fördergurt derart angeordnet werden, daß sie bei Eintreten eines bestimmten Verschleißbetrages zerstört werden oder herausfallen, und daß der im Falle ihrer durch Verschleiß der Fördergurtdeckplatte (4) bzw. Karkasse (6) entstandenen Zerstörung oder Entfernung auftretende Signalausfall von der Auswerteeinheit registriert und für Steuerungszwecke der Förderanlage ausgewertet wird.

2. Verfahren nach Patentanspruch 1, **dadurch gekennzeichnet, daß** im Falle der Zerstörung oder des Verlustes mindestens eines Transponders (10) ein Alarmsignal erzeugt wird und/oder eine Abschaltung des Fördergurtes (2) erfolgt und/oder eine graphische Darstellung der Position des ausgefallenen Senders bzw. der ausgefallenen Sender (10) vorgenommen wird.

3. Überwachungs- und Warnanordnung für einen Fördergurt zur Durchführung des Verfahrens nach Anspruch 1 mit in den Fördergurt in Abständen eingebetteten elektrischen Sendern und mit mindestens einer außerhalb des Gurtes ortsfest angeordneten Sende- und Empfangseinrichtung, wobei für die Spannungsversorgung der Sender eine als primäre Induktionsspule wirkende erregte Wicklung der außerhalb des Gurtes ortsfest angebrachten Sende- und Empfangseinrichtung vorgesehen ist, wobei die Sender jeweils an eine Datenträgerspule angeschlossen sind und einen Transponder bilden, wobei die Datenträgerspule (8) als Sekundärspule der ortsfesten Einrichtung (20) dient und von denen während der Spannungsversorgung Dauersignale mit ihren jeweils individuellen Kennungen in umgekehrter Richtung über die jeweilige Datenträgerspule (8) induktiv an die Wicklung einer der ortsfesten Sende- und Empfangseinrichtungen (20) übertragbar sind
**dadurch gekennzeichnet, daß** die Transponder (10) mit Datenträger (10) und Datenträgerspule (8) in dem Fördergurt (2) derart angeordnet sind, daß sie bei Eintreten eines bestimmten Verschleißbetrages zerstörbar sind oder herausfallen,
und daß die Transponder (10) im Falle ihrer durch Verschleiß der Fördergurtdeckplatte (4) bzw. Karkasse (6) entstandenen Zerstörung nicht mehr sendebereit sind.

4. Überwachungs- und Warnanordnung nach Patentanspruch 3,
**dadurch gekennzeichnet, daß** mehrere Transponder (10) in einer bestimmten Tiefe oder in verschiedenen Tiefen in die Deckplatte (4) bzw. zwischen Deckplatte (4) und Karkasse (6) und/oder in die Karkasse (6) eingesetzt sind.

5. Überwachungs- und Warnanordnung nach Patentanspruch 3,
**dadurch gekennzeichnet, daß** die Transponder (10) in neben- oder hintereinander gruppierten Einheiten angeordnet sind.

## Claims

1. Method of inductively monitoring a conveyor belt (2) with electrical transmitters (10), which are formed from integrated circuit transponders and inserted into the cover layer and/or carcase at intervals from one another, and with at least one transmitting and receiving means (20) disposed externally of the belt (2) in a stationary manner, the transmitters (10) receiving their voltage supply by being inductively connected to an energised winding (22), which acts as the primary coil, of the transmitting and receiving means (20), which is/are mounted externally of the belt (2) in a stationary manner, a respective data carrier coil (8) acting as the secondary coil of the voltage or current supply of the respective transmitter (10), from which, during the voltage supply, a continuous signal with an individual identification is transmitted in the reverse direction to the winding (22) of the stationary transmitting and receiving means (20), which signal is processed by an electronic evaluating unit, **characterised in that** the transponders (10), with the data carrier coil, are disposed in the conveyor belt in such a manner that they are destroyed or fail if a predetermined amount of wear occurs, and **in that** the signal failure, which occurs in the event of their destruction or removal arising because of wear on the conveyor belt cover plate (4) or carcase (6) respectively, is recorded by the evaluating unit and evaluated for the purpose of controlling the conveyor system.

2. Method according to claim 1, **characterised in that**, in the event of the destruction or the loss of at least one transponder (10), an alarm signal is generated and/or the conveyor (2) is switched-off and/or the position of the failed transmitter or respectively the failed transmitters (10) is graphically represented.

3. Monitoring and warning arrangement for a conveyor belt for accomplishing the method according to claim 1 with electrical transmitters, which are embedded in the conveyor belt at intervals from one another, and with at least one transmitting and receiving means disposed externally of the belt in a stationary manner, an energised winding of the transmitting and receiving means being provided for the voltage supply of the transmitters, which winding acts as the primary induction coil, and which transmitting and receiving means is mounted externally of the belt in a stationary manner, the transmitters being each connected to a respective data carrier coil and forming a transponder, the data carrier coil (8) serving as the secondary coil of the stationary means (20), and from which transmitters, during the voltage supply, continuous signals with their respective individual identifications are inductively transferable in the reverse direction to the winding of one of the stationary transmitting and receiving means (20) via the respective data carrier coil (8), **characterised in that** the transponders (10), with data carrier (10) and data carrier coil (8), are disposed in the conveyor belt (2) in such a manner that they are destructible or fail if a predetermined amount of wear occurs, and **in that** the transponders (10) are no longer ready for transmission in the event of their destruction which has arisen because of wear on the conveyor belt cover plate (4) or carcase (6) respectively.

4. Monitoring and warning arrangement according to claim 3, **characterised in that** a plurality of transponders (10) are inserted into the cover plate (4) or respectively between cover plate (4) and carcase (6) and/or into the carcase (6) at a predetermined depth or at different depths.

5. Monitoring and warning arrangement according to claim 3, **characterised in that** the transponders (10) are disposed in units which are grouped adjacent or behind one another.

## Revendications

1. Procédé pour la surveillance inductive d'une bande transporteuse (2) comportant des émetteurs électriques (10), qui sont insérés à distance les uns des autres dans la couche de revêtement et/ou dans la carcasse et sont constitués par des transpondeurs à circuits intégrés, et comportant au moins un dispositif d'émission et de réception (20), qui est monté fixe à l'extérieur de la bande, les émetteurs recevant leur tension d'alimentation au moyen d'un couplage inductif à un enroulement excité (22), agissant en tant que bobine primaire, du ou des dispositifs d'émission et de réception (20) montés fixes à l'extérieur de la bande (2), et une bobine (8) de support de données et agissant respectivement en tant que bobine secondaire de l'alimentation en tension ou en courant de l'émetteur respectif (10), à partir duquel, pendant l'alimentation en tension, un signal permanent ayant une caractéristique individuelle est transmis en sens inverse à l'enroulement (22) des dispositifs d'émission et de réception fixe (20), signal qui est traité par une unité d'exploitation électronique,
**caractérisé en ce**
**que** les transpondeurs (10) équipés de la bobine du support de données sont disposés dans la bande transporteuse de telle sorte qu'ils sont détruits ou sont défaillants lors de l'apparition d'une certaine valeur d'usure, et que la défaillance du signal, qui apparaît, dans le cas de la destruction ou de l'élimination de la bande, sous l'effet d'une usure de la plaque de revêtement (4) de la bande transporteuse ou de la carcasse (6), est enregistrée par l'unité d'exploitation et est exploitée pour la commande de l'installation de transport.

2. Procédé selon la revendication 1, **caractérisé en ce que** dans le cas de la destruction ou de la perte d'au moins un transpondeur (10), un signal d'alarme est produit et/ou un débranchement de la bande transporteuse (2) est exécuté et/ou une représentation graphique de la position de l'émetteur ou des émetteurs défaillants (10) est réalisée.

3. Dispositif de surveillance et d'avertissement pour une bande transporteuse pour la mise en oeuvre du procédé selon la revendication 1, comportant des émetteurs électriques insérés à certaines distances dans la bande transporteuse et comportant au moins un dispositif d'émission et de réception monté fixe à l'extérieur de la bande, et dans lequel pour l'alimentation en tension des émetteurs il est prévu un enroulement excité, qui agit en tant que bobine d'induction primaire, du dispositif d'émission et de réception monté fixe à l'extérieur de la bande, et dans lequel les émetteurs sont raccordés respectivement à une bobine de support de données et forment un transpondeur, et la bobine (8) de support de données est utilisée en tant que bobine secondaire du dispositif fixe (20) et, pendant l'alimentation en tension, des signaux permanents ainsi que leurs indicatifs individuels respectifs peuvent être transmis inductivement par les émetteurs dans la direction inverse, par l'intermédiaire de la bobine respective (8) de support de données, à l'enroulement de l'un des dispositifs d'émission et de réception fixes (20),
**caractérisé en ce que** les transpondeurs (10) équipés du support de données (10) et de la bobine (8) de support de données sont disposés dans la bande transporteuse (2) de telle sorte que lors de l'apparition d'une certaine valeur d'usure, ils sont détruits ou sont défaillants, et
que dans le cas de la destruction des transpondeurs (10), qui apparaît sous l'effet d'une usure de la plaque de revêtement (4) de la bande transporteuse ou de la carcasse (6), les transpondeurs ne sont plus à même d'émettre.

4. Dispositif de surveillance et d'avertissement selon la revendication 3, **caractérisé en ce que** plusieurs transpondeurs (10) sont insérés à une profondeur déterminée ou à des profondeurs différentes dans la plaque de revêtement (4) ou entre la plaque de revêtement (4) et la carcasse (6) et/ou dans la carcasse (6).

5. Dispositif de surveillance et d'avertissement selon la revendication 3, **caractérisé en ce que** les transpondeurs (10) sont disposés dans des unités regroupées les unes à côté des autres ou les unes derrière les autres.
